# EUROPEAN PATENT SPECIFICATION

(11) **EP 0 926 006 B1**
(45) Date of publication and mention of the grant of the patent: **19.11.2003**
(21) Application number: 97940358.1
(22) Date of filing: 12.09.1997
(51) Int. Cl.: B60R 1/06, B60R 1/08

(54) **OUTER MIRROR FOR AUTOMOBILES**
AUSSENSPIEGEL FÜR FAHRZEUGE
RETROVISEUR EXTERIEUR POUR AUTOMOBILES

(30) Priority: 12.09.1996 JP 24167896
(43) Date of publication of application: 30.06.1999
(73) Proprietor: Kabushiki Kaisha Tokai Rika Denki Seisakusho, Niwa-gun, Aichi 480-0195 (JP)
(72) Inventor: ISHIGAMI, Narumi, K.K. Tokai Rika Denki Seisakusho, Niwa-gun, Aichi 480-0195 (JP); INAKGAKI, Bunji, K.K. Tokai Rika Denki Seisakusho, Niwa-gun, Aichi 480-0195 (JP); OGASAWARA, Morihiko, KK Tokai RikaDenki Seisakusho, Niwa-gun, Aichi 480-0195 (JP)
(74) Representative: Glawe, Delfs, Moll & Partner
(86) International application number: JP9703219
(87) International publication number: WO98010958

(56) References cited:
- GB-A- 2 297 071
- JP-A- 3 112 752
- JP-A- 8 026 031
- JP-A- 8 268 164
- JP-A- 9 071 224
- JP-A- 60 193 739
- JP-A- 61 173 485
- US-A- 4 245 894

## Description

### TECHNICAL FIELD

The present invention relates to an outer mirror such as a door mirror used for an automobile, and particularly relates to the outer mirror for the automobile, in which the outer mirror has a main reflection surface and an auxiliary reflection surface a radius of curvature of which is different from that of the main reflection surface, and in which a boundary line forms between the main reflection surface and the auxiliary reflection surface.

### BACKGROUND ART

In recent years, such an outer mirror for an automobile, particularly such a door mirror for the automobile, is coming into practical use, as one in which an auxiliary reflection surface with a smaller radius of curvature than that of a main reflection surface is provided at a position outer than the main reflection surface relative to an automobile body in order to obtain a wider field of rear vision. Using this type of door mirror, a driver may feel difficulty in viewing an image in the field of rear vision reflected on the door mirror, due to a different reflection made between the main reflection surface and the auxiliary reflection surface. As a countermeasure against this difficulty, a boundary line is generally provided between the main reflection surface and the auxiliary reflection surface.

This boundary line can be formed by removing a linear portion of a reflection film mounted on the rear surface of a glass by means of a shot blasting, a laser beam machining, or another process, along the boundary between the main reflection surface and the auxiliary reflection surface. However, because the boundary line becomes transparent, or semi-transparent, with the means thereof, there is a possibility that such a problem in appearance may occur as a mechanical component or the like inside the casing of the door mirror is visible through the boundary line. In order to solve this problem, it is possible to adhere a dark-colored film on the rear surface of the reflection film so as to cover the boundary line, or to print the rear surface thereof with a dark-colored ink. However, with such measures, there is need of additional parts or additional processes, thus causing a problem of high cost of the door mirror.

EP-A-0 692 407 shows an outer mirror according to the preamble of claim 1.

Therefore, it is a technical object of the present invention to provide an outer mirror for automobile, in which an interior of a casing of the outer mirror is prevented from being seen through the boundary line and any cost increase is prevented, in which there is provided an auxiliary reflection surface, and in which a boundary line is formed between a main reflection surface and the auxiliary reflection surface by removing a linear portion of the reflection film.

### DISCLOSURE OF THE INVENTION

An outer mirror for automobile according to the present invention comprises: a substrate glass; and a reflection film which is formed on a rear surface of the substrate glass, wherein the substrate glass and the reflection film constitute a mirror body, wherein the mirror body has a main reflection surface and has an auxiliary reflection surface a radius of curvature of which is different from a radius of curvature of the main reflection surface, wherein there is provided a boundary line between the main reflection surface and the auxiliary reflection surface, the boundary line being formed by removing a part of the reflection film linearly. In the construction, in order to accomplish the above technical object, a pair of ends of the boundary line are located inside a peripheral edge of the substrate glass, and there is provided a scattering prevention film which is adhered on a rear surface of the mirror body, in which the scattering prevention film is constituted by a dark-colored film which is smaller than the mirror body and which covers all of the boundary line. By the way, in case that the outer mirror is of a type in which a filmy heater is adhered to a rear surface of the mirror body, the outer mirror may be constructed so that the filmy heater also functions as the scattering prevention film.

According to the above construction, the interior of casing of the outer mirror is prevented from being seen, or from being visible, through the boundary line, by specifying the color and dimension of the scattering prevention film that is commonly affixed to the rear surface of the mirror body in which the scattering prevention film is employed to prevent the mirror body from scattering in pieces when the mirror body is broken. Thus, with the construction, there is no need of printing and/or adhering an exclusive-use film on the rear surface of the mirror body. Accordingly, the cost increase of the outer mirror is prevented. Also, in case that the filmy heater also serves as the scattering prevention film, there is no need of any exclusive-use print nor film, so that the cost increase thereof is prevented.

### BRIEF DESCRIPTION OF DRAWINGS

Fig. 1 is a front view of a mirror body of an outer mirror for an automobile according to the present invention; and
Fig. 2 is a sectional view taken along the line II - II of Fig. 1.

### BEST MODE FOR CARRYING OUT THE INVENTION

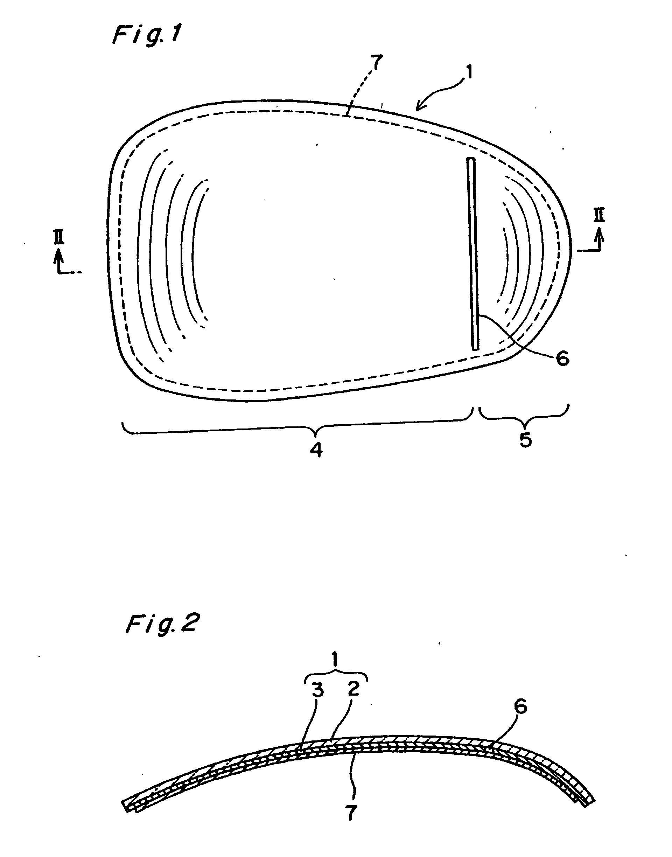

Referring to Figs. 1 and 2, a detailed discription is made below upon an outer mirror for an automobile according to an embodiment of the present invention.

Fig. 1 is a front view of a mirror body 1 of this door mirror, and Fig. 2 is a sectional view taken along the line II - II of Fig. 1. As shown in the figures, the mirror body 1 of this door mirror has a substrate glass 2 and a reflection film 3 (the thickness being emphasized in Fig. 2 for explanation's sake) which is formed on the rear surface of the substrate glass 2. The mirror body 1 has a main reflection surface 4, and an auxiliary reflection surface 5 which is formed smaller in radius of curvature than that of the main reflection surface 4 for a wider field of rear vision. Also, there is provided a boundary line 6 between the main reflection surface 4 and the auxiliary reflection surface 5, which is formed by removing a portion of the reflection film 3 linearly by means of a shot blasting or a laser beam machining. There is provided an unremoved portion around a periphery of the reflection film 3 in which the reflection film 3 is not removed, so that both end parts of the boundary line 6 are positioned inside than the periphery of the substrate glass 2.

A scattering prevention film 7 (the thickness being emphasized in Fig. 2 for explanation's sake) is adhered to the rear surface of the mirror body 1. This scattering prevention film 7 is normally provided in any door mirror for automobiles in order to prevent the mirror body 1 from scattering in fragments when it is broken. In this embodiment, the scattering prevention film 7 is specified to a dark color (for example, black), and is specified to such a size as to be smaller than the mirror body 1 and as to entirely cover the boundary line 6. By the way, in case that the door mirror is of a type in which a filmy heater for evaporating droplets of water deposited on a surface of the mirror body 1 is provided on the rear surface thereof, the filmy heater, which also serves as the scattering prevention film 7, can be specified to such a color and a size as described above.

With the arrangement as described above, it is no longer necessary to adhere an exclusive-use film, or to print, on the rear surface of the mirror body 1, for preventing the interior of the casing of the door mirror from being seen through the boundary line 6, thus preventing any high cost of the door mirror. By the way, it is generally very difficult to affix a scattering prevention film 7, equal in size to the mirror body 1, on the rear surface of the mirror body 1, and the scattering prevention film 7 with a smaller area than that of the mirror body 1 is employed. With the construction, in case that the boundary line 6 is formed so as to cross the mirror body 1 from end to end, there remains a transparent portion at an end portion (or end portions) of the boundary line 6. Accordingly, to specify the size, or dimension, of the scattering prevention film 7 and to specify the length of the boundary line 6, into the ones as described in this embodiment, is very much effective for not letting any transparent portion(s) thereof remain.

## Claims

1. An outer mirror for automobile, comprising:
a substrate glass(2); and
a reflection film (3) which is formed on a rear surface of the substrate glass,
wherein the substrate glass(2) and the reflection film(3) constitute a mirror body(1),
wherein the mirror body(1) has a main reflection surface (4) and has an auxiliary reflection surface(5) a radius of curvature of which is different from a radius of curvature of the main reflection surface(4), and
wherein there is provided a boundary line (6) between the main reflection surface (4) and the auxiliary reflection surface (5) , the boundary line (6) being formed by removing a part of the reflection film(3) linearly,
**characterized in that** the ends of the boundary line(6) are located inside a peripheral edge of the substrate glass(2), and
that there is provided a scattering prevention film (7) which is adhered on a rear surface of the mirror body(1), wherein the scattering prevention film(7) is constituted by a dark-colored film which is smaller than the mirror body(1) and which covers all of the boundary line(6).

2. The outer mirror for automobile as claimed in claim 1, wherein the scattering prevention film (7) is a filmy heater.

## Patentansprüche

1. Außenspiegel für Kraftfahrzeuge, mit:
einem Substratglas (2); und
einem Reflexionsfilm (3), der auf einer Rückseite des Substratglases ausgebildet ist,
wobei das Substratglas (2) und der Reflexionsfilm (3) einen Spiegelkörper (1) bilden,
wobei der Spiegelkörper (1) eine Hauptreflexionsoberfläche (4) und eine Hilfsreflexionsoberfläche (5) hat, deren Krümmungsradius sich von dem Krümmungsradius der Hauptreflexionsoberfläche (4) unterscheidet, und
wobei zwischen der Hauptreflexionsoberfläche (4) und der Hilfsreflexionsoberfläche (5) eine Grenzlinie (6) vorgesehen ist, wobei die Grenzlinie (6) durch lineares Entfernen eines Teils des Reflexionsfilms (3) ausgebildet ist,
**dadurch gekennzeichnet, dass** die Enden der Grenzlinie (6) innerhalb einer Umfangskante des Substratglases (2) liegen, und
dass ein Steuerungsverhinderungsfilm (7) vorgesehen ist, der an der Rückseite des Spiegelkörpers (1) angeklebt ist, wobei der Steuerungsverhinderungsfilm (7) durch einen dunkelfarbigen Film gebildet ist, der kleiner als der Spiegelkörper (1) ist, und der die gesamte Grenzlinie (6) abdeckt.

2. Außenspiegel für Kraftfahrzeuge nach Anspruch (1), wobei der Steuerungsverhinderungsfilm (7) ein hautförmiger Heizkörper ist.

## Revendications

1. Rétroviseur extérieur pour automobile, comprenant :
un substrat en verre (2) ; et
un film réfléchissant (3) qui est formé sur une surface arrière du substrat en verre (2),
dans lequel le substrat en verre (2) et le film réfléchissant (3) constituent un corps de miroir (1),
dans lequel le corps de miroir (1) a une surface réfléchissante principale (4) et une surface réfléchissante auxiliaire (5) dont un rayon de courbure est différent du rayon de courbure de la surface réfléchissante principale (4), et
dans lequel est prévue une ligne de séparation (6) entre la surface réfléchissante principale (4) et la surface réfléchissante auxiliaire (5), la ligne de séparation (6) étant formée en enlevant une partie du film réfléchissant (3) linéairement,
**caractérisé en ce que** les extrémités de la ligne de séparation (6) sont situées à l'intérieur d'un bord périphérique du substrat en verre (2), et
**en ce qu'**il est prévu un film anti-dispersion (7) qui est collée sur une surface arrière du corps de miroir (1), dans lequel le film anti-dispersion (7) est constitué d'un film de couleur noire qui est plus petit que le corps de miroir (1) et qui couvre toutes les lignes de séparation (6).

2. Rétroviseur extérieur pour automobile selon la revendication 1, dans lequel le film anti-dispersion (7) est un réchauffeur en forme de film.
